# EUROPEAN PATENT SPECIFICATION

(11) **EP 2 591 655 B1**
(45) Date of publication and mention of the grant of the patent: **08.07.2015**
(21) Application number: 12191928.6
(22) Date of filing: 09.11.2012
(51) Int. Cl.: A01C 3/02, E04H 7/06

(54) **Storage tank with flexible cover and walkway along the periphery of the wall's upper edge**
Lagertank mit flexibler Abdeckung und Laufweg entlang der Wandoberkante
Réservoir de stockage avec recouvrement flexible et passerelle le long de la lisière supérieure de la paroi

(30) Priority: 11.11.2011 DK 201170619
(43) Date of publication of application: 15.05.2013
(73) Proprietor: A-Consult Holding Group A/S, 7800 Skive (DK)
(72) Inventor: Østergaard, Søren, 9000 Aalborg (DK)
(74) Representative: Tellefsen, Jens J.

(56) References cited:
- AU-B2- 505 364
- US-A- 2 418 229
- US-A- 2 878 939
- US-A1- 2004 006 925
- US-B1- 6 324 792

## Description

### Field of the Invention

The present invention relates to a storage tank of the type comprising of a tank floor surrounded by a tank wall, and where the tank is covered by a flexible cover such that the floor, wall and cover enclose an inner volume.

### Background of the Invention

Tanks of this type are typically used for storing various liquid or semi-liquid substances such as for example manure and waste. In connection with the present invention it is especially tanks used in connection with Anaerobic Digestion and Biogas Plants which are interesting. The invention however is also suitable for use in connection with other types of tanks. During storage bacteria in the liquid contained will digest part or all of the biodegradable material and generate gasses, mainly methane but also other gasses which are desirable as biofuels used for generation of heat or power. As the production of gas happens over time, a certain flexibility in the tank is desirable, and therefore, when the combined volume of liquid and gas is low, the flexible cover will be more or less a deflated, whereas, as the gas production increases and thereby the volume inside the tank expands, the flexible cover will expand correspondingly.

Tanks for these types of installations are a known in the AD and Biogas Industry. Examples are illustrated in US2418229A, US2004006925 and US6324792.

As a tank reaches a certain size i.e. having a certain diameter and height it will become desirable to have a walkway along the upper periphery of the tank wall. The walkway is mainly used to inspect the connection between the flexible cover and the tank and to visually inspect the inner volume of the tank through sight-glasses in either the flexible cover or integrated in the upper part of the vertical tank wall.

### Description of the Invention

The invention provides a novel and inventive storage tank of the type mentioned above which is particular in that along the upper periphery of the wall is arranged a walkway, which walkway extends into the tank and where the flexible cover is fastened to said walkway. In the industry it is known to attach the walkway to the outside of the tank extending away from the tank wall and volume. The walkway is typically constructed by using galvanised steel members bolted on to the outside of the tank wall. The present invention, on the other hand, provides a walkway which extends into or towards the centre of the tank and thereby reduces the diameter of the flexible cover and thereby providing savings to the cost of the flexible cover - also as the installation of same can be carried out without temporary scaffolding around the perimeter of the tank wall.

In a further advantageous embodiment of the invention the tank is substantially circular, and, centrally in the tank, is arranged a column substantially parallel with the tank wall, and that between the wall and the column is arranged a number of beams, where said walkway is arranged on top of or integrated with the beams.

The beams serves a number of purposes such as for example giving stability to the top end of the tank walls and providing support for the flexible cover in the deflated state, such that the cover does not fall into the liquid stored inside the tank when the inner volume, and especially the gas inside the tank, is not sufficient to keep the flexible cover free of the liquid stored inside the tank.

Some types of flexible covers are double walled. An air pump is supplied to create a pressure in between the two layers, whereby the cover will obtain its shape regardless of an inner gas pressure.

By further utilising the beams as support for the walkway, a stable support is provided for the walkway and the walkway as such may more easily and more securely be installed than the prior art bolted on constructions.

As the beams typically will be spaced substantially evenly along the circumference of the tank, spanning from the periphery of the tank to the centre of the tank, more or less standardised walkway sections may be pre-manufactured and thereby making installation less costly and less time consuming.

In a further advantageous embodiment of the invention, one or more openable hatches are arranged in said walkway allowing access to the inner volume. The hatches provide easy access to the inner volume, and, furthermore, as the walkway has load carrying capabilities, it is possible to arrange equipment used in the tank, fastened to the walkway and accessible through the hatches. For a number of these tanks, used especially as mentioned above in the biogas production facilities, it is desirable to install means inside the tank for stirring the content in order to avoid sedimentation and increase the methane production. For this purpose one or more mixers or stirrers are typically installed inside the tank. In order to maintain, service or replace such mechanical equipment, it is normally necessary to empty the tank in order to gain access to these devices. However, by providing hatches in the walkway, it is possible to install equipment in connection with the hatches such that it is possible to service the equipment in the tank without first having to empty the tank. Furthermore, by providing a lock in connection with the hatches, it is possible to service or inspect the equipment even without removing the gas from inside the tank which allows for continuous running of the installation without interference from maintenance and service work. Furthermore, it is possible to install pipe-work necessary in order to feed the tank and to tap the gas from the tank through the walkway as supposed to how it is normally achieved i.e. by openings in the vertical tank wall.

In a further advantageous embodiment of the invention, the diameter of the tank is at least 5 m and the width of the walkway is between 0,6 m and 2 m. Especially as tanks reach a certain size, it is desirable to be able to access the top of the tank easily from above, and, furthermore, the cost of the flexible cover increases dramatically as the size of the covered area increases. It is therefore desirable to minimize the size of the cover, such that it is able to accommodate the produced or desired amount of gas without becoming too big and thereby too expensive. For these and other reasons, it is advantageous to arrange a walkway which does not interfere with the production capability but reduces installation cost. Furthermore, in some countries when a tank reaches a diameter above 6 metres, it is a requirement that a walkway around the top of the tank is provided. By providing a walkway of a certain width, it is possible to operate equipment on the walkway for example in connection with servicing, maintenance, replacement, etc. of equipment as mentioned above.

In a further advantageous embodiment, the beams and the walkway are manufactured in concrete, preferably as prefabricated concrete segments. Concrete is a very stable and strong material. Especially, when manufacturing the concrete elements as prefabricated elements, it is possible to industrialize the process which provides a number of advantages. Among them being that the concrete panels are finished with a higher quality which increases the durability and thereby the life expectancy and furthermore the tolerances may be kept at a very low level, such that it is possible to pre-manufacture substantially standardised elements which may be used for various tanks. Concrete panels having a relatively long life expectancy also have an economic advantage in comparison with other materials.

In a still further advantageous embodiment, the walkway may be made of two or more segments, and the width of the walkway may vary along the circumference of the tank. In this manner, it is possible to create rather wide walkways without using heavy lifting equipment, and, at the same time, being able to vary the width of the walkway makes it possible to provide more walkway work space especially around the hatches whereas along other sections of the walkway it is only required that it is possible to walk by in order to inspect the construction.

Other materials may be used for the construction of the walkway, beams and columns than concrete, such as for example that the walkway and/or the beams and/or the columns are made from steel optionally stainless steel, resin or polymer composite materials, optionally fibre reinforced.

The tank may also have other shapes than circular such as circular, oval or any polygonal shape. For large tanks or if it is desirable to use shorter for example standardised beams one or more columns may be arranged in the tank

### Description of the Drawing

The invention will now be described with reference to the accompanying drawing.
- Fig. 1: illustrates a tank according to the invention;
- Fig. 2: illustrates the tank with the flexible cover removed;
- Fig. 3: illustrates a plane view of a tank;
- Fig. 4: illustrates a cross section through a tank according to the invention.

### Detailed description of an embodiment

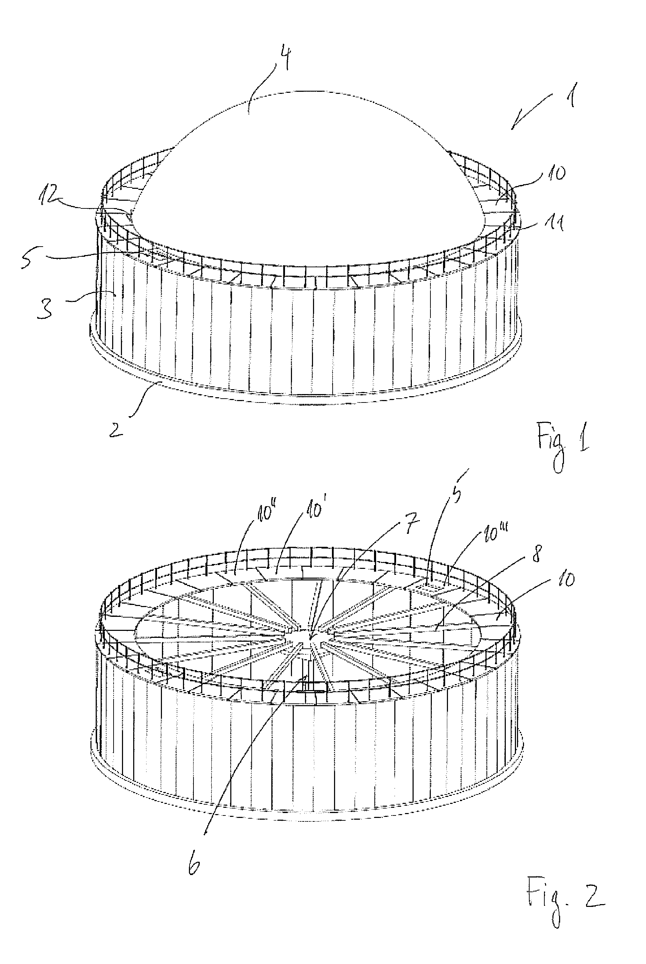

In fig. 1 is illustrated a tank 1 according to the invention. The tank comprises a tank floor 2, sidewalls 3, and a flexible cover 4. A walkway 10 according to the invention is arranged along an upper edge of the wall 3. The walkway 10 is provided with a hand-railing 11 for safety reasons. The flexible cover 4 is attached to an inner periphery 12 of the walkway 10 in a traditional manner. In the walkway is illustrated a hatch 5 which provides access to the interior of the tank 1.

Turning to fig. 2, the flexible cover 4 has been removed exposing the substructure. The substructure comprises a centrally located column 6 which, at an upper end, is provided with a land 7 such that beams 8 spanning between an upper edge of the wall 3 and the land 7 are arranged substantially horizontally at a level of the upper part of the wall 3. The walkway 10 is made up of a plurality of substantially identical concrete panels 10',10",10"' where the standard concrete panels 10 are sections of an annulus, and, by assembling a number of these annulus sections, a circular walkway is assembled. The standard concrete panels 10', 10" are more or less identical and are assembled to provide a standard walkway. Special concrete panels 10"' are provided with openings in which covers/hatches 5 are arranged allowing access to the interior of the tank 1.

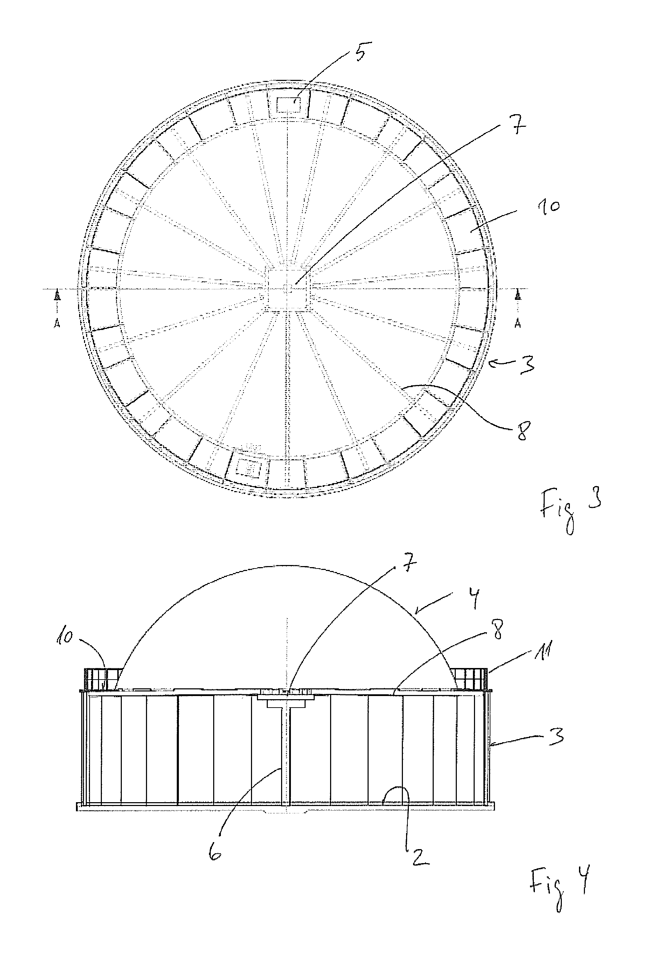

In fig. 3 a tank is seen in a plane view where it is clear that the beams 8 extend from the top op the walls 3 to the land 7. By fastening the beams to the top of the wall and the land 7, beams spanning the diameter of the tank via the land 7 will strengthen the top of the tank, and, thereby, help to increase the rigidity of the tank, especially increasing its strength against the liquid pressure from inside. The beams 8 and the land 7 furthermore serve to ensure that the flexible cover 4, which is not illustrated in fig. 3 but see fig. 1 and 4, when deflated is not coming into contact with any liquid present in the tank 1.

In fig. 4 is illustrated a cross section through a tank according to the invention where the various features described above are clearly identifiable.

Although the invention has been explained with reference to a circular tank in the embodiments above, it is clear that the same principles are suitable for tanks of other shapes, such as for example oval or square tanks where the advantages for providing a walkway extending towards the central part of the tank may also be applied with corresponding inventive effects.

## Claims

1. Storage tank (1) of the type comprising a tank floor (2), surrounded by a tank wall (3), and where the tank is covered by a flexible cover (4), such that the floor, wall and cover enclose an inner volume, **characterised in that** along the periphery of the wall's upper edge is arranged a walkway (10), which walkway extends into the tank, and where said flexible cover is fastened to said walkway.

2. Storage tank according to claim 1 **characterised in that** the tank is substantially circular and that centrally in the tank is arranged one or more columns (6) substantially parallel with the tank wall, and that between the wall and the one or more columns is arranged a number of beams (8), where said walkway is arranged on top of the beams.

3. Storage tank according to claim 1 or 2 **characterised in that** one or more openable hatches (5) are arranged in said walkway allowing access to the inner volume.

4. Storage tank according to claim 2 or 3 **characterised in that** the diameter of the tank is at least 5 m and that the width of the walkway is between 0,6 m and 2 m.

5. Storage tank according to 2 claim 2 or 4 or 3, if dependent on claim 2, **characterised in that** beams and walkway are manufactured in concrete, preferably as prefabricated concrete segments.

6. Storage tank according to claim 5 **characterised in that** the width of the walkway may be made up of two or more segments, and that the width of the walkway may vary along the periphery of the tank.

7. Storage tank according to any of claims 1 to 4 **characterised in that** the walkway and/or the beams and/or the columns are made from steel optionally stainless steel, resin or polymer composite materials, optionally fibre reinforced.

8. Storage tank according to claim 1 **characterised in that** the tank may have any shape such as circular, oval or any polygonal shape, and that one or more columns are arranged in the tank.

## Patentansprüche

1. Lagertank (1) von dem Typ, der einen von einer Tankwand (3) umgebenen Tankboden (2) umfasst, und wobei der Tank mit einer flexiblen Abdeckung (4) überzogen ist, so dass der Boden, die Wand und die Abdeckung einen Innenraum einschließen, **dadurch gekennzeichnet, dass** ein in den Tank sich erstreckender Laufweg (10) entlang der Peripherie der Wandoberkante angeordnet ist, und die flexible Abdeckung am Laufweg befestigt ist.

2. Lagertank nach Anspruch 1, **dadurch gekennzeichnet, dass** der Tank hauptsächlich kreisförmig ist, und dass zentral im Tank hauptsächlich parallel zur Tankwand eine oder mehrere Säulen (6) angeordnet ist/sind, und dass zwischen der Wand und der/den Säule/n eine Vielzahl von Balken (8) angeordnet ist, wobei der Laufweg oben auf den Balken angeordnet ist.

3. Lagertank nach Anspruch 1 oder 2, **dadurch gekennzeichnet, dass** eine oder mehrere öffenbaren Luken (5) im Laufweg angeordnet sind und den Zugang zum Innenraum ermöglichen.

4. Lagertank nach Anspruch 2 oder 3, **dadurch gekennzeichnet, dass** der Querschnitt des Tanks wenigstens 5 Meter beträgt, und dass die Breite des Laufwegs zwischen 0,6 und 2 Metern beträgt.

5. Lagertank nach Anspruch 2 oder 4 oder 3, wenn abhängig von Anspruch 2, **dadurch gekennzeichnet, dass** die Balken und der Laufweg aus Beton hergestellt sind, vorzugsweise als Fertigsegmente aus Beton.

6. Lagertank nach Anspruch 5, **dadurch gekennzeichnet, dass** sich die Breite des Laufwegs aus zwei oder mehreren Segmenten bilden lässt, und dass die Breite des Laufwegs entlang der Tankperipherie variierbar ist.

7. Lagertank nach irgendeinem der Ansprüche 1 bis 4, **dadurch gekennzeichnet, dass** der Laufweg und/oder die Balken und/oder die Säulen aus Stahl, wahlweise aus Edelstahl, Harz oder vorzugsweise faserverstärkten Polymer-Verbundwerkstoffen hergestellt sind.

8. Lagertank nach Anspruch 1, **dadurch gekennzeichnet, dass** der Tank eine beliebige Form aufweisen kann, sowie eine kreisförmige, ovale oder irgendeine polygonale Form, und dass eine oder mehrere Säule/n im Tank angeordnet ist/sind.

## Revendications

1. Réservoir de stockage (1) du type comprenant un plancher de réservoir (2), entouré d'une paroi de réservoir (3), et où le réservoir est recouvert par un couvercle flexible (4), de telle sorte que le plancher, la paroi et le couvercle entourent un volume interne, **caractérisé en ce qu'**une passerelle (10) est agencée le long de la périphérie du bord supérieur de la paroi, laquelle passerelle s'étend dans le réservoir, et où ledit couvercle flexible est fixé à ladite passerelle.

2. Réservoir de stockage selon la revendication 1, **caractérisé en ce que** le réservoir est essentiellement circulaire et **en ce qu'**au centre du réservoir, une ou plusieurs colonnes (6) sensiblement parallèles à la paroi du réservoir sont disposées, et **en ce qu'**entre la paroi et la une ou plusieures colonnes, un certain nombre de poutres (8) sont agencées, où ladite passerelle est agencée sur la partie supérieure des poutres.

3. Réservoir de stockage selon la revendication 1 ou 2, **caractérisé en ce qu'**une ou plusieurs trappes ouvrables (5) sont agencées dans ladite passerelle permettant l'accès au volume intérieur.

4. Réservoir de stockage selon la revendication 2 ou 3, **caractérisé en ce que** le diamètre du réservoir est au moins 5 m, et **en ce que** la largeur de la passerelle est entre 0,6 m et 2 m.

5. Réservoir de stockage selon la revendication 2 ou 4 ou 3, si elle dépend de la revendication 2, **caractérisé en ce que** les poutres et la passerelle sont fabriquées en béton, de préférence sous la forme de segments préfabriqués en béton.

6. Réservoir de stockage selon la revendication 5, **caractérisé en ce que** la largeur de la passerelle peut être constitué de deux ou plus de deux segments, et **en ce que** la largeur de la passerelle peut varier le long de la périphérie du réservoir.

7. Réservoir de stockage selon l'une quelconque des revendications 1 à 4, **caractérisé en ce que** la passerelle et/ou les poutres et/ou les colonnes sont constituées d'acier, éventuellement d'acier inoxydable, des matières composites de polymère ou de résine, éventuellement renforcées par des fibres.

8. Réservoir de stockage selon la revendication 1, **caractérisé en ce que** le réservoir peut avoir n'importe quelle forme, telle que circulaire, ovale ou n'importe quelle forme polygonale, et **en ce qu'**une ou plusieurs colonnes sont agencées dans le réservoir.
